# EUROPÄISCHE PATENTANMELDUNG

(11) **EP 2 862 749 A2**
(43) Veröffentlichungstag der Anmeldung: **22.04.2015**
(21) Anmeldenummer: 14075006.8
(22) Anmeldetag: 22.01.2014
(51) Int. Cl.: B60R 3/02, E06C 5/06

(54) **Zugangssystem zu einer Baumaschine, einer Lademaschine oder einer anderen Arbeitsmaschine**

(30) Priorität: 06.02.2013 DE 202013001302 U
(71) Anmelder: Terex Deutschland GmbH, 76669 Bad Schönborn (DE)
(72) Erfinder: Dietze, Kai, 76669 BAD Schönborn (DE)
(74) Vertreter: Moser Götze & Partner Patentanwälte mbB

(57) **Zusammenfassung**

Zugangssystem zu einer Baumaschine, einer Lademaschine oder einer anderen mobilen Arbeitsmaschine mit einer Leiter (1)als Aufstiegshilfe, die am Stahlbau angelenkt ist und mittels Betätigung mindestens eines Bedienhebels (6, 7) von einer den Auf- oder Abstieg ermöglichenden, vertikalen Betriebsposition in eine horizontale Ruheposition schwenkbar ist, wobei die Leiter (1) über eine Schwenkschwelle (3) mit einer als Schwenkarm (9) ausgebildeten Verstelleinrichtung verbunden ist, die sich am Unterbau (2) der Kabine (14) befindet, ein innerer Bedienhebel (6) und ein äußerer Bedienhebel (7) vorgesehen sind und dass sich in der mechanischen Verbindung zwischen dem inneren Bedienhebel (6) und dem äußeren Bedienhebel (7) ein Drehschieber (13.1) befindet, der das Druckmedium (5) zum Schwenkzylinder (4) freigibt oder absperrt.

## Beschreibung

Die Erfindung betrifft ein Zugangssystem zu einer Baumaschine, einer Lademaschine oder einer anderen mobilen Arbeitsmaschine mit einer Leiter als Aufstiegshilfe, die am Stahlbau angelenkt ist und mittels Betätigung mindestens eines Bedienhebels von einer den Auf- oder Abstieg ermöglichenden, vertikalen Betriebsposition in eine horizontale Ruheposition schwenkbar ist.

Die Bereiche für Bedienung, Wartung und Instandhaltung einer Baumaschine, einer Lademaschine oder einer anderen mobilen Arbeitsmaschine befinden sich meist in einer erhöhten Position und sind vom Boden aus über Aufstiegshilfen erreichbar. Die Aufstiegshilfen sind oft starr mit dem Stahlbau der Maschine verbunden und befinden sich nicht immer am selben Stahlbau wie die Bereiche, die zugänglich zu machen sind.. So ist an Maschinen mit positionsveränderlicher Kabine wie zum Beispiel Maschinen mit schwenkbarem Oberwagen oder Hubarbeitsbühnen daher das Ein- und Aussteigen in oder aus der Kabine nur in wenigen definierten Positionen möglich, da sich nur dann die Kabine in der richtigen Position zu den Aufstiegshilfen befindet. In jeder anderen Position ist das Aus- oder Einsteigen mit erhöhtem Risiko verbunden oder nicht möglich. Befinden sich die Aufstiegshilfen am selben Stahlbau wie die Kabine selbst, könnten die Aufstiegshilfen das eigentliche Arbeiten mit der Maschine behindern, da der zusätzliche Bauraum der Aufstiegshilfe nicht mehr als Arbeitsbereich der Maschine genutzt werden kann. Zur Vermeidung dieser Nachteile empfiehlt sich der Einsatz einer Aufstiegshilfe, die sich am Stahlbau der Kabine befindet und zusätzlich in eine Position oder Lage gebracht werden kann, die den eigentlichen Arbeitsbereich nicht einschränkt.

Dies ist beispielsweise aus der DE 20 2008 013 393 U1 bekannt; wo die Leiter schwenkbar an der Fahrerkabine angelenkt ist und bei Nichtgebrauch seitlich an der Kabinenwand zur Anlage kommt.

Ebenfalls eine schwenkbare Leiter ist bei der WO 2007/062464 vorgesehen.

Im Vergleich dazu ist beispielsweise bei dem Baufahrzeug gemäß der DE 11 2007 003 108 T5 die Leiter ortsfest am Maschinenrahmen angeordnet.

Bei der Entwicklung einer Aufstiegshilfe müssen eine ganze Reihe von Überlegungen beachtet werden. Dazu gehört, dass sicherzustellen ist, dass die Aufstiegshilfe vom Bediener innerhalb der Kabine und/oder von Personen außerhalb der Kabine in die gewünschte Position gebracht werden kann. Je nach Gewicht, Länge oder Ausführung ist eine einfache manuelle Betätigung zur Verbringung in unterschiedliche Positionen nicht mehr möglich, was eine Unterstützung durch einen Antrieb notwendig macht. Außerdem muss sichergestellt werden, dass die Position der Aufstiegshilfe fixiert ist und durch eine von außen einwirkende Kraft seine Position nicht verändert, wie zum Beispiel durch die Schwerkraft bedingt oder durch Betreten der Aufstiegshilfe.

Die Aufstiegshilfe befindet sich ferner nicht zwingend im Blickfeld des Bedieners, wenn er sich innerhalb der Kabine befindet. Daher muss ein Indikator vorgesehen werden, der die aktuelle Position der Aufstiegshilfe erkennbar macht. Gleichzeitig müssen die Maschine oder einzelne Funktionen der Maschine so beeinflusst werden, dass die Aufstiegshilfe nicht beschädigt wird oder eine andere gefährliche Situation entstehen kann. Die Position der Kabine darf sich nicht ändern, wenn die Aufstiegshilfe sich in der Stellung befindet, die zum Ein- oder Aussteigen vorgesehen ist. Das Verlassen der Kabine muss erschwert sein oder die Situation muss erkennbar sein, wenn sich die Aufstiegshilfe in einer Position befindet, die nicht zum Aussteigen geeignet ist.

Gelöst werden diese Anforderungen erfindungsgemäß mit einem Zugangssystem zu einer Baumaschine, einer Lademaschine oder einer anderen mobilen Arbeitsmaschine mit einer Leiter als Aufstiegshilfe, die am Stahlbau angelenkt ist und mittels Betätigung mindestens eines Bedienhebels von einer den Auf- oder Abstieg ermöglichenden, vertikalen Betriebsposition in eine horizontale Ruheposition schwenkbar ist, dadurch, dass die Leiter über eine Schwenkwelle mit einer als Schwenkarm ausgebildeten Verstelleinrichtung verbunden ist, die sich am Unterbau der Kabine befindet,
dass der Schwenkzylinder an einer Seite mit dem Stahlbau drehbar verbunden ist und von einer Steuereinrichtung mit Druckmedium versorgt wird,
dass ein innerer Bedienhebel bis in das Innere der Kabine reicht,
dass ein Nockenteller vorgesehen ist, der mit mit mindestens einer axialen Erhebung versehen und mechanisch mit dem inneren Bedienhebel und/oder mit dem äußeren Bedienhebel verbunden ist,
dass die Schwenkwelle mit einem Schwenkarm verbunden ist, der drehbar mit der einen Seite des Schwenkzylinders verbunden ist und zwei Lagerungen aufweist, wobei die Lagerringe mechanisch mit dem Stahlbau verbunden sind,
dass der innere Lagerring stimseitig mindestens eine Bohrungen aufweist, in der mindestens ein federbelasteter Verriegelungsstift beim Erreichen mindestens einer definierten Position der Schwenkwelle bewegbar ist,
dass die Schwenkwelle mindestens eine Bohrungen aufweist, in denen mindestens eine Entriegelungsstange angeordnet ist die beim Erreichen der gewünschten Position durch mindestens einen Verriegelungsstift längsverschiebbar ist, und
dass in der mechanischen Verbindung zwischen dem inneren Bedienhebel und dem äußeren Bedienhebel sich ein Drehschieber befindet, der das Druckmedium zum Schwenkzylinder freigibt oder absperrt.

Vorzugsweise Ausgestaltungen ergeben sich aus den Unteransprüchen.

Die Erfindung soll nachfolgend mit Bezug auf die Zeichnungen erläutert werden.

Dabei zeigt:

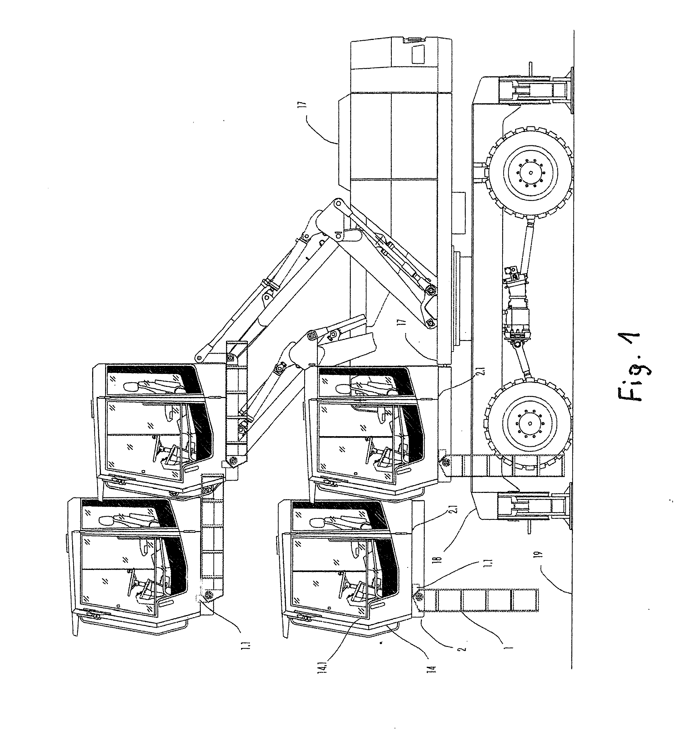

- Fig.1:: ein Beispiel für eine Fahrerkabinenanordnung mit der erfindungsgemäßen Leiter,
- Fig. 2:: die Leiter in waagerechter (Ruhe-) Position,
- Fig. 3:: Leiter in senkrechter (Betriebs-) Position,

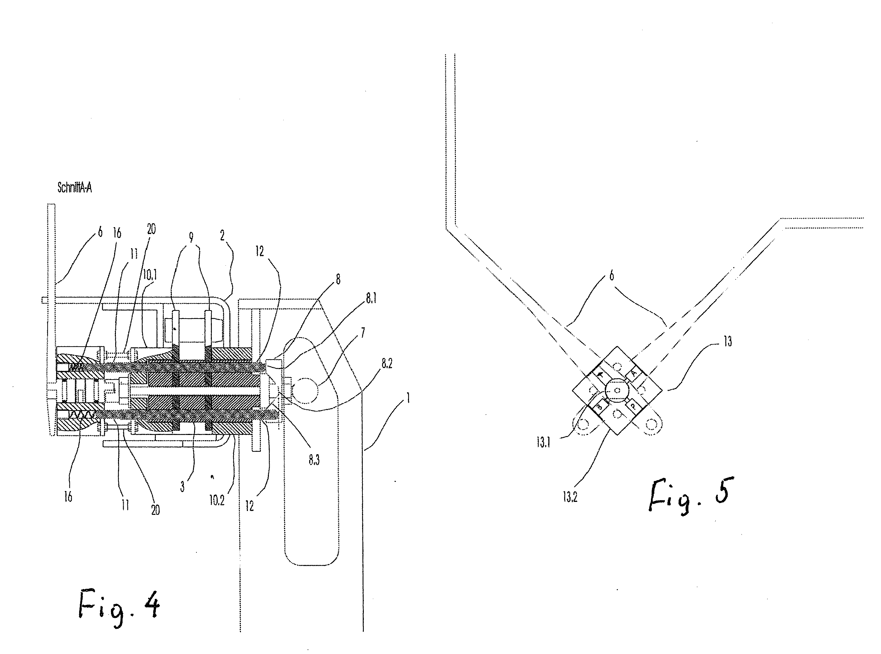

- Fig. 4 und 5:: die mechanischen Merkmale der Schwenkanordnung und

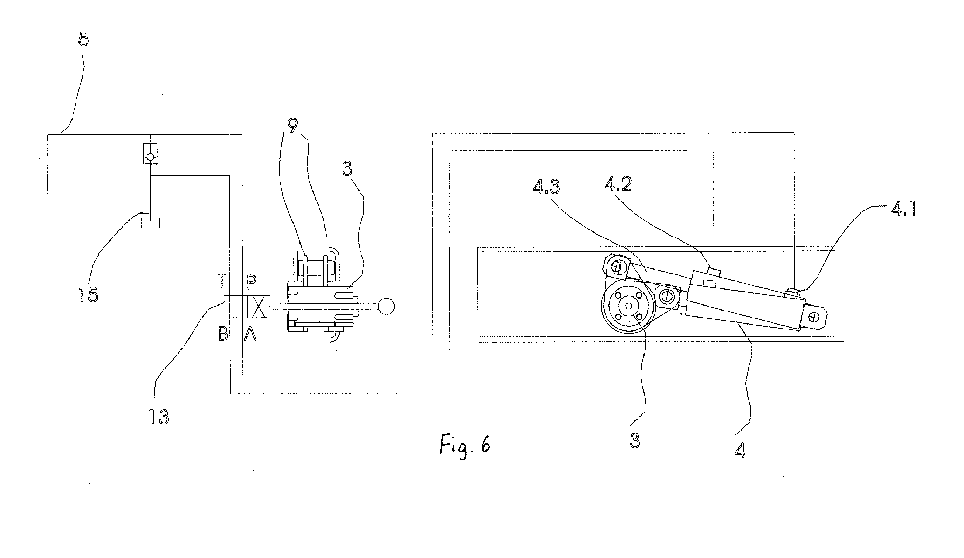

- Fig. 6:: schematisch die hydraulischen Merkmale

Eine vorzugsweise Ausbildung für den Zugang zu einer Maschinenfahrerkabine wird nachfolgend anhand der Zeichnungen näher erläutert.

Grundsätzlich handelt es sich um eine durch ein Druckmedium unterstützte Betätigung einer schwenkbaren Leiter 1, die am Unterbau 2 der Kabine 14 befestigt ist. Die Leiter 1 ist außerhalb des Unterbaus 2 der Kabine 14 mit dem äußeren Bereich einer Schwenkwelle 3 mechanisch verbunden. Die Drehachse der Leiter 1 ist horizontal angeordnet oder in einem Winkel, der von der Horizontalen abweicht, um bei Benutzung der Leiter 1 eine Neigung gegenüber der vertikalen Bordwand des Arbeitsgeräts zu erreichen. Die Leiter 1 hat über die Schwenkwelle 3 und den Schwenkarm 9 eine mechanische Verbindung zur Verstelleinrichtung, die sich im Unterbau 2 der Kabine befindet. Eine alternative Ausbildung besteht darin, dass sich die Verstelleinrichtung außerhalb des Unterbaus 2 befindet. In der weiteren Beschreibung wird die Verstelleinrichtung als Schwenkzylinder 4 bezeichnet. Der Schwenkzylinder 4 ist an einer Seite mit dem Unterbau 2 der Kabine drehbar verbunden und an der anderen Seite mit dem Schwenkarm 9 drehbar verbunden. Der Schwenkzylinder 4 wird von einer Steuerungseinrichtung mit Druckmedium 5 (z.B. eine Druckflüssigkeit oder ein Druckgas) versorgt. Das ein- und ausströmende Druckmedium ermöglicht, dass sich die Länge des Schwenkzylinders durch Einfahren oder Ausfahren der Kolbenstange 4.3 ändert. Damit kann eine mechanische Bewegung erzeugt werden, die die Position der Leiter 1 gegenüber dem Stahlbau der Arbeitsmaschine verändert. Die Bedieneinrichtung ist so konzipiert, dass beim Verbringen der Leiter 1 in die Betriebsposition Druck in die Stangenseite 4.2 des Schwenkzylinders 4 gelangt und das zylinderbodenseitige Druckmedium 4.1 entweichen kann, was zum Einfahren der Kolbenstange 4.3 und eine Veränderung der Länge des Schwenkzylinders 4 bewirkt und damit eine Drehung der Schwenkwelle 3 zur Folge hat. Beim Anheben der Leiter 1 gelangt Druckmedium 5 in die Kolbenbodenseite 4.1 des Zylinders 4 und das zylinderstangenseitige 4.2 Druckmedium kann entweichen. Dadurch verändert sich die Länge des Schwenkzylinders 4 durch Ausfahren der Kolbenstange 4.3 und es kommt zu einer Drehbewegung der Schwenkwelle 3. Die Bedienung der Leiter 1 erfolgt über einen Bedienhebel 6 der bis in das Innere der Kabine reicht und somit vom Arbeitsmaschinenführer betätigt werden kann. Außerhalb des Unterbaus 2 der Kabine befindet sich ein weiterer Bedienhebel 7, verbunden mit einem Nockenteller 8, der mit zwei axialen Erhebungen versehen und mechanisch mit dem inneren Bedienhebel 6 verbunden ist. Die axialen Erhebungen des Nockentellers 8 werden in der nachfolgenden Beschreibung als Nockenberge 8.1 bezeichnet. Der Bereiche zwischen den Nockenbergen 8.1 werden in der nachfolgenden Beschreibung als Nockental 8.2 bezeichnet. Die Bereiche zwischen Nockenberg 8.1 und Nockental 8.2 bilden die Nockenflanken 8.3. Die alternative Ausbildung besteht darin, dass sich der Nockenteller 8 innerhalb des Unterbaus 2 befindet. Die Betätigung den äußeren Bedienhebels 7 ist nur erforderlich, um im Notfall dem Bergungspersonal das Verbringen der Leiter 1 in die Betriebsposition zu ermöglichen, um Zugang zur Kabine 14 und zum Bediener zu erlangen. Die Schwenkwelle 3 ist mit dem Schwenkarm 9 verbunden, der drehbar mit der mit dem Schwenkzylinder 4 verbunden ist und zwei Lagerungen aufweist, wobei die zugehörigen Lagerringe 10.1 und 10.2 mechanisch mit dem Kabinenunterbau 2 verbunden sind.

Die alternative Ausbildung weist eine einen Schwenkzylinder 4 auf, der an einer Seite drehbar mit dem der Kabine 14 zugeordneten Stahlbau und an der anderen Seite mit der Leiter drehbar verbunden ist.

Der innere Lagerring 10.1 weist stirnseitig vier Bohrungen auf, in denen sich in der vorzugsweisen Ausbildung vier federbelastete Stifte bewegen können, die in der nachfolgenden Beschreibung als Verriegelungsstifte 11 bezeichnet werden. Die Schwenkwelle 3 selbst weist zwei Bohrungen auf in denen sich zwei Stifte 12 bewegen können. Diese beiden Stifte 12 dienen zur Entriegelung der formschlüssigen Verbindung zwischen der Schwenkwelle 3 und dem inneren Lagerring 10.1 und werden in der nachfolgenden Beschreibung als Entriegelungsstangen 12 bezeichnet.

Eine alternative Ausbildung besteht darin, dass eine andere Anzahl der Verriegelungsstifte 11 und eine andere Anzahl der Entriegelungsstangen 12 verwendet wird, um den Schwenkwinkel der Leiter von 90° in der vorzugsweisen Ausbildung an die Gegebenheiten einer alternativen Anwendung anzupassen. Durch eine Erhöhung der Anzahl insbesondere der Verriegelungsstifte 11 kann das Drehmoment zum Halten der Leiter in seiner Position erhöht werden.

Innerhalb der mechanischen Verbindung zwischen dem inneren Bedienhebel 6 und dem äußeren Bedienhebel 7 befindet sich der Drehschieber 13.1, der durch eine Steuerungsnut das Druckmedium 5 zum Schwenkzylinder 4 leitet. Der Drehschieber 13.1 befindet sich drehbar gelagert in einem Ventilgehäuse 13.2, das vier Anschlüsse für das Druckmedium aufweist.

Ein Anschluss P ist mit einer maschinenseitig vorhandenen Druckleitung 5 verbunden.

Ein weiterer Anschluss T dient zur Verbindung mit der Druckentlastung 15.

Zwei weitere Anschlüsse A und B sind mit dem Schwenkzylinder 4 verbunden.

Vier Bohrungen im Ventilgehäuse 13.2 dienen zur Aufnahme von Spiralfedern 16, die gegen die vier Verriegelungsstifte 11 wirken, die in den inneren Lagerring 10.1 hineinragen In der alternativen Ausbildung werden die Spiralfedern 16 durch Elemente aus elastisch verformbarem Material ersetzt. Das Ventilgehäuse 13.2 und der innere Lagerring 10.1 sind durch die Verbindung 20 mechanisch miteinander verbunden. Drehschieber 13.1 und Ventilgehäuse 13.2 bilden gemeinsam das Ventil 13.

Die alternative Ausbildung besteht darin, dass das Ventil als ein Kugelhahn mit Küken ausgebildet ist wodurch das Druckmedium gleichermaßen durch Bohrungen und Kanäle geleitet wird.

### Beschreibung eines vorzugsweisen Ausführungsbeispiels

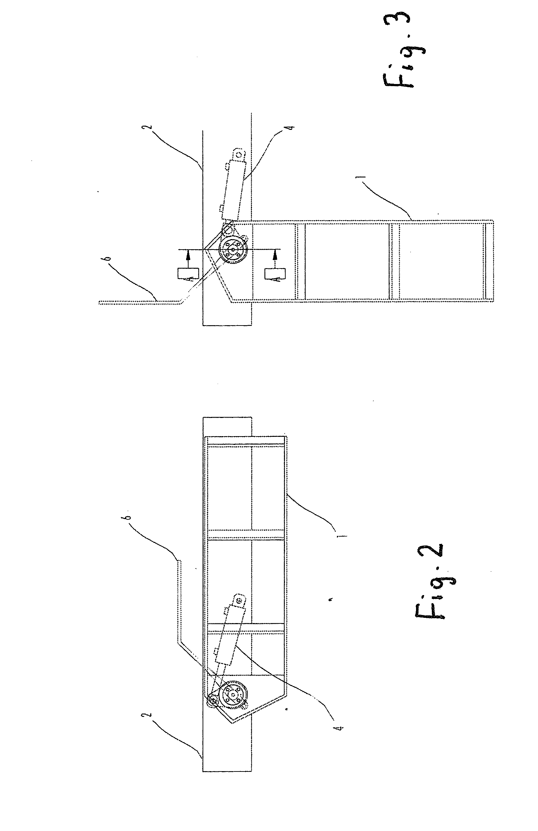

Die Leiter 1 befindet sich in der senkrechten Position (Fig. 3), um das Einsteigen in die Kabine 14 zu ermöglichen. Die Bedienhebel 6, 7 befindet sich in einer Stellung, so dass sich die Entriegelungsstangen 12 in den Nockentälern 8.2 des Nockentellers 8 befinden. Dabei werden in der vorzugsweisen Ausbildung zwei von vier Verriegelungsstiften 11 durch die Federn 16 im Ventilgehäuse 13.2 in die Bohrungen der Schwenkwelle 3 verbracht. Dadurch erfolgt eine mechanische Blockierung zwischen dem inneren Lagerring 10:1 und der Schwenkwelle 3 und die Leiter 1 ist gegen jedwede Bewegung formschlüssig gesichert. In der vorzugsweisen Ausbildung werden die beiden anderen Verriegelungstifte 11 durch Federkräfte in Position an der inneren Stirnseite der Schwenkwelle 3 gehalten und sind hierbei ohne Funktion. Wenn sich der Bediener in der Kabine 14 befindet, kann die maschinenseitige Anlage zum Aufbau der Druckversorgung 5 gestartet werden und Druckmedium 5 steht am Ventil 13 an. Dabei befinden sich der innere und äussere Bedienhebel 6, 7 und der Drehschieber 13.1 in einer Stellung, die das Druckmedium 5 auf die Stangenseite 4.2 des Schwenkzylinders 4 leitet. Der Druck in der Stangenseite 4.2 des Zylinders 4 bewirkt über die Kolbenstange 4.3 eine Kraft am Schwenkarm 9, der ein Drehmoment auf die Schwenkwelle 3 verursacht. Dadurch wird die Leiter 1 in der senkrechten Position zusätzlich gehalten. Bei Betätigung der äußeren und inneren Bedienhebel 6, 7 von innen oder von außen werden durch gleichzeigiges Verdrehen des Nockentellers 8 zunächst die Entriegelungsstangen 12 über die Nockenflanken 8.3 bewegt und drücken somit die Verriegelungsstifte 11 aus der Schwenkwelle 3. Bei weiterer Betätigung wird der Drehschieber 13.1 im Ventilgehäuse 13.2 in eine Stellung gebracht, die das Druckmedium 5 über die Anschlüsse P und A in die Bodenseite 4.1 des Schwenkzylinders 4 leitet. Das zylinderstangenseitige Druckmedium 4.2 kann über das Ventil 13 über die Anschlüsse B und T entweichen zur Position 15 hin. Der Druck in der Bodenseite 4.1 des Schwenkzylinders 4 bewirkt eine Kraft, die durch Ausfahren der Kolbenstange 14.3 zu einer Verlängerung des Schwenkzylinders 4 führt, die eine Änderung des Winkels am Schwenkarm 9 bewirkt und zu einer Drehbewegung der Schwenkwelle 3 führt. Dadurch bewegt sich die Leiter 1 aus der senkrechten Position in die waagerechte Position. Gleichzeitig verändern die Entriegelungsstangen 12 ihre Lage auf dem Nockenteller 8 und werden beim Verlassen der Nockenberge 8.1 entlastet. Sobald die Leiter 1 die waagerechte Endlage (Fig 2) erreicht hat gelangen die Bohrungen der Entriegelungsstangen 12 vor die Verriegelungsstifte 11, die daraufhin durch die Spiralfedern 16 in die Bohrungen der Schwenkwelle 3 geschoben werden. Dadurch kommt es zu einer formschlüssigen Verbindung zwischen dem inneren Lagerring 10.1 und der Schwenkwelle 3, die die Leiter 1 gegen Bewegung sichert. Zusätzlich wird die Leiter 1 in ihrer Position gehalten durch den Druck im Schwenkzylinder 4, der über die Kolbenstange 4.3 und über den Schwenkarm 9 ein Drehmoment an der Schwenkwelle 3 bewirkt. Der innere Bedienhebel 6 behindert nun durch seine an den Innenraum der Kabine 14 angepasste Form den Ausgang aus der Kabine 14. Durch Sensorik 2.1, die mit den maschinenseitigen Bedienelementen gekoppelt ist, werden nun alle vorgesehenen Maschinenfunktionen freigegeben, die eine Relativbewegung der Kabine 14 mit dem Unterbau 2 gegenüber dem Stahlbau 17 und 18 der Maschine und dem Untergrund 19 erlauben, wie Schwenken des Oberwagens 17, vertikales Verfahren der Kabine 14, horizontales Verfahren der Kabine 14 und Verfahren.der Maschine 18, solange sich die Leiter 1 in der waagerechten Endlage, der Ruheposition, befindet (Fig 2).

Das Verstellen der Leiter 1 in die senkrechte Betriebs-Position, die das Aussteigen aus der Kabine 14 ermöglicht, erfolgt in ähnlicher Weise wie nachfolgend beschrieben. Beim Betätigen des inneren Bedienhebels 6 durch den Bediener oder im Notfall durch Betätigung des äußeren Bedienhebels 7 durch Bergungskräfte von außen veschieben sich die Entriegelungsstangen 12, wenn diese durch Verdrehen des Nockentellers 8 an den Nockenflangen 8.3 zum Nockenberg 8.1 gelangen, Die Entriegelungsstangen drücken ihrerseits die Verriegelungsstifte 11 aus der Schwenkwelle 3. Damit wird die formschlüssige Verbindung zwischen dem inneren Lagerring 10.1 und der Schwenkwelle 3 aufgehoben. Bei weiterer Betätigung des Bedienhebels 6 oder 7 wird der Drehschieber 13.1 im Ventilgehäuse 13.2 in eine Stellung gebracht, die das Druckmedium 5 über die Anschlüsse P und B in die Stangenseite 4.2 des Schwenkzylinders 4 freigibt. Das kolbenbodenseitige Druckmedium 4.1 kann über die Anschlüsse A und T des Ventils 13 entweichen zur Position 15 hin. Der Druck und das in die Stangenseite 4.2 des Schwenkzylinders 4 einströmende Druckmedium führt zum Einfahren der Kolbenstange 4.3 , was eine Drehung des Schwenkarms 9 und der Schwenkwelle 3 bewirkt. Dadurch bewegt sich die Leiter 1 aus der waagerechten Position in die senkrechte Position. Gleichzeitig verändern die Entriegelungsstangen 12 ihre Lage auf dem Nockenteller 8 und werden beim Verlassen des Nockenbergs 8.1 entlastet. Sobald die Leiter 1 die senkrechte Endlage erreicht hat gelangen die Bohrungen der Entriegelungsstangen 12 vor die Verriegelungsstifte 11, die daraufhin durch die Spiralfedern 16 in die Bohrungen der Schwenkwelle 3 geschoben werden. Dadurch kommt es zu einer formschlüssigen Verbindung zwischen dem inneren Lagerring 10.1 und der Schwenkwelle 3, die die Leiter 1 gegen Bewegung sichert. Zusätzlich wird die Leiter 1 in ihrer Position gehalten durch die Kraft ausgehend vom Schwenkzylinder 4 und durch das Drehmoment ausgehend von der Schwenkwelle 3. Der innere Bedienhebel 6 gibt nun durch seine an den Innenraum der Kabine 14 angepasste Form den Ausgang aus der Kabine 14 frei. Sobald sich die Leiter 1 nicht mehr in der waagerechten Endlage befindet sperrt eine Sensorik 2.1 diejenigen Funktionen, die zu einer Relativbewegung zwischen Kabine 14 und Stahlbau 17 und 18 der Arbeitsmaschine oder zwischen Kabine 14 und dem Untergrund 19 führen, wie Schwenken des Oberwagens, Verstellen der Kabinenposition oder Verfahren der Arbeitsmaschine 18.

Zusätzliche Indikatoren analog zu 2.1 an den beweglichen Teilen wie Schwenkwelle 3, Schwenkarm 9, Schwenkzylinder 4 oder Leiter 1 dienen zur Bestimmung der Position der Leiter 1 oder zur Beeinflussung von maschinenseitigen Funktionen wie Freigabe oder Sperrung von Arbeitsfunktionen oder Aktivierung oder Deaktivierung von Sicherheitseinrichtungen. Eine Erweiterung besteht darin, die Kabinentür 14.1 im geschlossenen Zustand zu verriegeln, durch einen mechanischen Fortsatz 1.1 an der Leiter 1, dem Schwenkarm 9 oder der Schwenkwelle 3, wenn sich die Leiter 1 in der Ruheposition befindet oder das Öffnen der Kabinentür 14.1 nur dann frei zu geben, wenn sich die Leiter 1 in der Betriebsposition befindet. Die Bedienung des Ventils 13 ist in der alternativen Ausbildung elektrisch betätigt in der Bauart eines Stellmotor. Das Ventil 13 ist in alternativen Ausbildungen in der Bauart eines Magnetventils, Schieberventils oder Sitzventils mit mechanischer oder elektrischer Betätigung.

## Patentansprüche

1. Zugangssystem zu einer Baumaschine, einer Lademaschine oder einer anderen mobilen Arbeitsmaschine mit einer Leiter (1) als Aufstiegshilfe, die am Stahlbau angelenkt ist und mittels Betätigung mindestens eines Bedienhebels (6,7) von einer den Auf- oder Abstieg ermöglichenden, vertikalen Betriebsposition in eine horizontale Ruheposition schwenkbar ist,
**dadurch gekennzeichnet,**
**dass** die Leiter (1) über eine Schwenkwelle (3) mit einer als Schwenkarm (9) ausgebildeten Verstelleinrichtung verbunden ist, die sich am Unterbau (2) der Kabine 14 befindet,
**dass** der Schwenkzylinder (4) an einer Seite mit dem Stahlbau (2) drehbar verbunden ist und von einer Steuereinrichtung (13) mit Druckmedium versorgt wird,
**dass** ein innerer Bedienhebel (6) bis in das Innere der Kabine reicht,
**dass** ein Nockenteller (8) vorgesehen ist, der mit mit mindestens einer axialen Erhebung (8.1) versehen und mechanisch mit dem inneren Bedienhebel (6) und/oder mit dem äußeren Bedienhebel (7) verbunden ist,
**dass** die Schwenkwelle (3) mit einem Schwenkarm (9) verbunden ist, der drehbar mit der einen Seite(4.3) des Schwenkzylinders (4) verbunden ist und zwei Lagerungen aufweist, wobei die Lagerringe (10.1 und 10.2) mechanisch mit dem Stahlbau (2) verbunden sind, dass der innere Lagerring (10.1) stimseitig mindestens eine Bohrungen aufweist, in der mindestens ein federbelasteter Verriegelungsstift (11) beim Erreichen mindestens einer definierten Position der Schwenkwelle (3) bewegbar ist,
**dass** die Schwenkwelle (3) mindestens eine Bohrungen aufweist, in denen mindestens eine Entriegelungsstange (12) angeordnet ist die beim Erreichen der gewünschten Position durch mindestens einen Verriegelungsstift (11) längsverschiebbar ist, und
**dass** in der mechanischen Verbindung zwischen dem inneren Bedienhebel (6) und dem äußeren Bedienhebel (7) sich ein Drehschieber (13.1) befindet, der das Druckmedium (5) zum Schwenkzylinder (4) freigibt oder absperrt.

2. Zugangssystem nach Anspruch 1,
**dadurch gekennzeichnet,**
**dass** der Drehschieber (13.1) drehbar in einem Ventilgehäuse (13.2) mit vier Anschlüssen für das Druckmedium angeordnet ist, wobei ein Anschluss P mit einer maschinenseitig vorhandenen Druckleitung (5) verbunden ist, ein weiterer Anschluss T zur Druckentlastung (15) dient und zwei weitere Anschlüsse A und B mit dem Schwenkzylinder (4) verbunden sind.

3. Zugangssystem nach einem der vorstehenden Ansprüche,
**dadurch gekennzeichnet,**
**dass** im Ventilgehäuse (13.2) mindestens eine Bohrung vorgesehen ist, die zur Aufnahme von mindestens einem elastisch verformbaren Element (16) dient, die gegen mindestens einen Verriegelungsstift (11) drückt, der in den inneren Lagerring (10.1) hineinragt, und dass der Drehschieber (13.1) und das Ventilgehäuse (13.2) gemeinsam das Ventil (13) bilden.
